(19) **Europäisches Patentamt**
**European Patent Office**
**Office européen des brevets**

(11) **EP 4 657 344 A1**

(12) **EUROPEAN PATENT APPLICATION**

(43) Date of publication:
03.12.2025 Bulletin 2025/49

(21) Application number: 25178645.5

(22) Date of filing: 23.05.2025

(51) International Patent Classification (IPC):
$G06Q\ 10/06^{(2023.01)}$ $\quad$ $G06Q\ 10/063^{(2023.01)}$
$G06Q\ 10/0631^{(2023.01)}$ $\quad$ $G06Q\ 30/0201^{(2023.01)}$
$G06Q\ 30/0238^{(2023.01)}$

(52) Cooperative Patent Classification (CPC):
G06Q 10/06; G06Q 10/063; G06Q 10/0631;
G06Q 10/06311; G06Q 10/063116;
G06Q 10/063118; G06Q 10/063119;
G06Q 10/06313; G06Q 10/06317;
G06Q 30/020121; G06Q 30/0238

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.05.2024 US 202418680267**

(71) Applicant: **NCR Voyix Corporation
Atlanta, GA 30308 (US)**

(72) Inventors:
• **ABADI, Shiran**
**Tel-Aviv (IL)**
• **HAIZLER, Tamar Miriam**
**Kfar-Saba (IL)**
• **ENGEL, Anael Miryam**
**Yodfat (IL)**

(74) Representative: **Secerna LLP
The Old Fire Station
18 Clifford Street
York YO1 9RD (GB)**

(54) **OPTIMIZING RESOURCE SCHEDULING FOR TRANSACTION TERMINALS**

(57) A combination of historical transaction data, operational constraints, and machine learning techniques are processed to predict optimal staffing levels for point-of-sale (POS) and self-checkout (SCO) terminals. Historical transaction logs are processed to determine transaction processing times for both POS and SCO terminals. A machine learning model is then trained to establish relationships between total traffic and the traffic durations at POS and SCO terminals. Based on these relationships, along with traffic for a specified interval and operational constraints specific to the store, an optimal staffing combination of POS cashiers and SCO attendants is calculated. These optimal staffing combinations are subsequently provided to store managers through an interface. This system aims to enhance store operational efficiency, reduce labor costs, and improve customer satisfaction by optimizing transaction throughput and minimizing customer wait times.

**Description**

**Background**

Efficient labor scheduling at retail stores, particularly in balancing the number of cashiers at point-of-sale (POS) terminals and attendants at self-checkout (SCO) terminals, is critical for enhancing customer satisfaction and optimizing operational costs. Existing approaches struggle to accurately predict the optimal staffing levels due to the dynamic nature of store traffic and the complexity introduced by the availability of SCO terminals.

It is an aim of the present invention to at least partly mitigate one or more of the above-mentioned problems.

**Summary**

According to a first aspect of the present invention there is provided a method, comprising:

determining traffic durations for self-checkout (SCO) terminals and point-of-sale (POS) terminals from historical transaction data;

training a machine learning model (model) to determine relationships between the traffic durations and traffic totals;

calculating an optimal staffing combination for SCO terminals and POS terminals of a store in a user-defined interval using a traffic total for the user-defined interval, current relationships provided by the model based on the traffic total, and at least one operational constraint associated with the store; and

providing the optimal staffing combination through an interface to a user for reducing labor costs and improving operational efficiency of the store.

Aptly, wherein determining further includes obtaining the historical transaction data as historical transaction logs for the SCO terminals and POS terminals associated with multiple stores of a retailer.

Aptly, wherein determining further includes calculating the traffic durations and the traffic totals from the historical transaction logs for each of the multiple stores and generating training records for training of the model with the traffic durations being features and the traffic totals labeled in each of the training records.

Aptly, wherein training further includes defining an equation as the traffic total equal to a first coefficient multiplied by a POS traffic duration that is added to a second coefficient multiplied by a SCO traffic duration, wherein the current relationships comprise the first coefficient and the second coefficient.

Aptly, wherein training further includes training a supervised linear regression model with the training records to derive the model.

Aptly, wherein calculating further includes finding the SCO traffic duration of the equation based on a maximum number of SCO terminals, a minimum number of POS terminals, and an SCO-to-attendant ratio, wherein the at least one operational constraint comprises the maximum number of SCO terminals, the minimum number of POS terminals, and the SCO-to-attendant ratio.

Aptly, wherein finding further includes reducing the SCO traffic duration by an idle time, wherein the at least one operational constraint further comprises the idle time.

Aptly, wherein reducing further includes solving the equation for the POS traffic duration.

Aptly, wherein solving further includes increasing the POS traffic duration by the idle time.

Aptly, wherein increasing further includes determining an attendant total for the optimal staffing combination associated with the SCO terminals by dividing a value for the SCO traffic duration by the SCO-to-attendant ratio and further dividing a result by the user-defined interval.

Aptly, wherein determining further includes determining a cashier total for the optimal staffing combination by dividing the POS traffic duration by the user-defined interval.

According to a second aspect of the present invention there is provided a method, comprising:

receiving, through an interface operated by a user, a request for an optimal staffing combination to monitor and to operate self-checkout (SCO) terminals and point-of-sale (POS) terminals of a store during an interval;

obtaining, through the interface, at least one operational constraint associated with the store, or a retailer associated with the store;

obtaining a total number of transactions for the interval;

providing the total number of transactions to a machine learning model (model);

receiving a POS traffic duration coefficient and a SCO traffic duration coefficient as output from the model;

calculating the optimal staffing combination based on the total number of transactions, the POS traffic duration coefficient, the SCO traffic duration coefficient, and at least one operational constraint; and

providing the optimal staffing combination for the interval to the user through the interface responsive to the request.

Aptly, wherein the at least one operational constraint comprises a maximum number of SCO terminals, a maximum number of POS terminals, a minimum number of POS terminals, a SCO-to-attendant ratio, and idle time between each transaction in the total number of transactions.

Aptly, wherein obtaining the total number of transactions further includes obtaining the total number of transactions from a traffic forecast model based on the interval and the store when the interval is a future interval of time.

Aptly, wherein obtaining the total number of transactions further includes determining the total number of transactions from historical transaction logs of the store when the interval is a past interval of time.

Aptly, wherein calculation further includes solving an equation for an SCO traffic duration and a POS traffic duration using idle time between transactions for the store, a maximum number of SCO terminals, and a minimum number of POS terminals, wherein the equation is the total number of transactions equal to the POS traffic duration coefficient multiplied by the POS traffic duration plus, the SCO traffic duration coefficient multiplied by the SCO traffic duration.

Aptly, the method further comprising, processing a time series for the interval in a report, and providing a report to the user through the interface, wherein the report comprises distinct optimal staffing combinations for each repeating interval in the time series.

Aptly, the method further comprising updating the model based on user feedback received through the interface regarding an accuracy and effectiveness of provided optimal staffing combinations, wherein the model adjusts the POS traffic duration coefficient and the SCO traffic duration coefficient based on changes in a POS traffic duration and an SCO traffic duration observed in traffic patterns at the store.

According to a third aspect of the present invention there is provided a system, comprising:

at least one processor and a non-transitory computer-readable storage medium;
the non-transitory computer-readable storage medium comprises executable instructions; and
the executable instructions when executed by the at least one processor cause the at least one processor to perform operations comprising:

receiving, through an interface operated by a user, a request for an optimal staffing combination to monitor and operate self-checkout (SCO) terminals and point-of-sale (POS) terminals of a store during a specified interval;
obtaining, through the interface, at least one operational constraint associated with the store, or a retailer associated with the store, wherein the at least one operational constraint includes a maximum number of SCO terminals, a maximum number of POS terminals, a minimum number of POS terminals, a SCO-to-attendant ratio, and idle time between each transaction;
obtaining a total number of transactions for the specified interval, wherein the total number of transactions is obtained from a traffic forecast model when the specified interval is a future interval of time, and from historical transaction logs of the store when the specified interval is a past interval of time;
providing the total number of transactions to a machine learning model (model);
receiving from the model a POS traffic duration coefficient and a SCO traffic duration coefficient as output;
calculating the optimal staffing combination based on the total number of transactions, the POS traffic duration coefficient, the SCO traffic duration coefficient, and the at least one operational constraint by solving an equation for an SCO traffic duration and a POS traffic duration using the idle time between transactions, the maximum number of SCO terminals, and the minimum number of POS terminals;
processing a time series for the specified interval in a report, and providing a report to the user through the interface, wherein the report comprises distinct optimal staffing combinations for each repeating interval in the time series; and
providing the report for the time series to the user through the interface responsive to the request.

Aptly, wherein the model is trained as a supervised linear regression model to derive relationships between the total number of transactions, the POS traffic duration, and the SCO traffic duration in order to predict the POS traffic duration coefficient and the SCO traffic duration coefficient.

## Brief Description of the Drawings

Embodiments of the present invention will now be described hereinafter, by way of example only, with reference to the accompanying drawings in which:

FIG. 1 is a diagram of a system for optimizing resource scheduling for transaction terminals, according to an example embodiment.
FIG. 2 is a flow diagram of a method for optimizing resource scheduling for transaction terminals, according to an example embodiment.

FIG. 3 is a flow diagram of another method for optimizing resource scheduling for transaction terminals, according to an example embodiment.

**Detailed Description**

In the retail sector, particularly in environments with both traditional point-of-sale (POS) terminals and self-checkout (SCO) terminals, managing labor hours effectively is a challenge that directly impacts customer satisfaction, operational efficiency, and profitability. Traditional methods of scheduling labor rely heavily on historical data and managerial intuition, which often fail to account for real-time variations in customer traffic and transactional complexities. This often results in either overstaffing - which escalates labor costs - or understaffing, which leads to long checkout lines and poor customer service.

The complexity of the problem increases with the integration of SCO terminals. While SCO terminals are designed to reduce labor costs and improve customer flow, they require careful coordination with POS terminals to optimize staffing. Each SCO terminal typically needs fewer attendants compared to POS terminals, but the optimal number can vary significantly depending on factors such as the time of day, day of the week, store layout, and the nature of transactions. Current systems do not dynamically adjust staffing in response to these variables, nor do they learn from ongoing transaction data to improve future predictions.

Additionally, traditional systems for determining staffing needs in retail environments often rely on transactional data to assess the adequacy of staffing levels. However, such systems face significant challenges as transactional data alone does not provide a complete picture of staffing dynamics. For instance, transactional logs may show the presence of cashiers during specific intervals, but these logs typically do not indicate whether these cashiers were actively engaged in processing transactions or were performing other tasks. This limitation is exemplified by cases where cashiers are logged in but do not process any transactions, or where their activity levels vary significantly, leading to potential misinterpretations of staffing adequacy.

Embodiments of the technology disclosed herein address these challenges by introducing a novel system and methods for optimizing labor hours in retail environments that utilize both POS and SCO terminals. The embodiments employ a machine learning model (hereinafter "model") that leverages historical transaction data, forecasted or observed customer traffic, operational constraints, and/or real-time data to predict customer traffic and an optimal mix of POS cashiers and SCO attendants for a given interval of time at a given retail store.

Embodiments of the disclosed technology innovatively address the inadequacies of traditional systems by focusing on the actual traffic durations rather than the mere presence of staff. By analyzing the total time transactions (e.g., number of transactions or items scanned) are processed at both POS and SCO terminals, the techniques infer the necessary labor hours without relying on potentially misleading data about staff presence.

For example, consider a scenario observed in transactional data where two cashiers are logged in, but only one actively processes transactions. Traditional systems might incorrectly assume adequate staffing based on the presence of two cashiers. In contrast, our techniques evaluate the actual transaction processing activity, revealing that only one cashier was effectively contributing, thereby providing a more accurate assessment of staffing needs.

This approach allows for a more dynamic and responsive staffing model that adapts to actual operational demands rather than static schedules. It is particularly effective in environments where staff may switch roles or be intermittently engaged in transaction processing, ensuring that staffing levels are optimized based on the real transactional workload.

As used herein, a "transaction terminal" refers to a SCO terminal or a POS terminal. A transaction terminal includes a variety of integrated peripheral devices such as a bioptic scanner, a horizontal scanner, a vertical scanner, a handheld scanner, a media recycler or depository, a touch display, an item weigh scale, an integrated item weigh scale and scanner, and bagging weigh scale, a personal identification number (PIN) pad, a keyboard, one or more cameras, a card reader, one or more wireless transceivers, a media dispenser, a receipt printer, a coin dispenser, a media infeed, a coin infeed, and/or other peripheral devices.

In the case of a SCO terminal, an attendant oversees transactions of customers being performed on a pool of SCO terminals. A "SCO pool size" is a total number of SCO terminals monitored by a single attendant. In the case of a POS terminal, a single cashier performs transactions on behalf of customers at a single POS terminal.

As used herein, an "operator" refers to an individual that is operating a transaction terminal. A cashier is an operator when a customer's transaction is being performed at a POS terminal. A customer is an operator when the customer is performing a self-checkout transaction at a SCO terminal.

"Resources," as used herein, can refer to SCO terminals, POS terminals, attendants, and/or cashiers. Typically, a store manually manages its resources for purposes of maximizing profits while minimizing costs by attempting to find an optimal mix of attendants monitoring SCO terminals and cashiers working POS terminals during any given interval of time. As will be demonstrated, manual store resource management is eliminated with teachings presented herein and an optimal mix or an optimal combination of resource allocations are provided to the store through an interface. "Traffic" refers to transactions and/or items scanned at the SCO terminals and POS terminals.

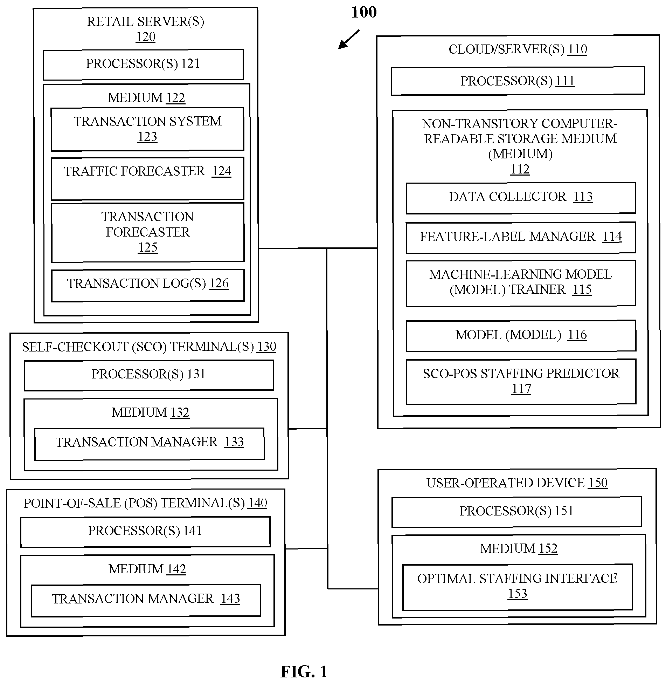

FIG. 1 is a diagram of a system 100 for optimizing resource scheduling for transaction terminals according to an example embodiment. Notably, the components are shown schematically in simplified form, with only those components relevant to understanding of the embodiments being illustrated.

Furthermore, the various components (that are identified in system 100) are illustrated and the arrangement of the components are presented for purposes of illustration only. Notably, other arrangements with more or less components are possible without departing from the teachings of optimizing resource scheduling for transaction terminals, presented herein and below.

System 100 includes a cloud/server 110 (hereinafter "cloud 110"), one or more retail servers 120, SCO terminals 130, POS terminals 140, and one or more user-operated devices 150. Cloud 110 includes at least one processor 111 and a non-transitory computer-readable storage medium (hereinafter "medium") 112, which includes instructions for a data collector 113, a feature-label manager 114, a model trainer 115, a model 116, and SCO-POS staffing predictor 117. The instructions when executed by processor 111 cause processor 111 to perform processing or operations discussed herein and below with respect to 113--117.

Each retail server 120 includes at least one processor 121 and a medium 122, which includes instructions for a transaction system 123 and an optional traffic forecaster 124. The instructions when executed by processor 121 cause processor 121 to perform processing and operations discussed herein and below with respect to 123-124. Medium 122 also includes one or more transaction logs 126.

Each SCO terminal 130 includes at least one processor 131 and a medium 132, which includes instructions for a transaction manager 133. The instructions when executed by processor 131 cause processor 131 to perform processing and operations discussed herein and below with respect to 133.

Each POS terminal 140 includes at least one processor 141 and a medium 142, which includes instructions for a transaction manager 143. The instructions when executed by processor 141 cause processor 141 to perform processing and operations discussed herein and below with respect to 143.

Each user-operated device 150 includes at least one processor 151 and a medium 152, which includes instructions for an optimal staffing interface 153. The instructions when provided to and executed by processor 151 cause processor 151 to perform the processing or operations discussed herein and below with respect to 153.

Initially, data collector 113 obtains historical data relevant to determining customer traffic at the SCO terminals 130 and POS terminals 140. Customer traffic is defined as a total number of transactions or items scanned during a given interval of time. In an embodiment, the interval of time is a specified interval or a user-defined interval. In an embodiment, data collector 113 obtains one or more historical transaction logs 126 from transaction system 123 for a corresponding store of a corresponding retailer. The transaction logs 126 include a variety of information for each transaction processed by a store, such as and by way of example only, store identifier, transaction terminal identifier, a transaction terminal type, transaction start date with time of day, transaction end date with time of day, etc. The transaction system 123, transaction manager 133, and transaction manager 143 process the traffic on the SCO terminals 130 and POS terminals 140 to maintain the transaction logs 126.

Feature-label manager 114 uses the transaction logs 126 provided by the data collector 113 to label the total number of transactions of items scanned for an interval of time. Feature-label manager 114 labels the total number of transactions of items scanned for the interval as customer traffic (i.e., a count of the total number of transactions across both the SCO terminals 130 and the POS terminals 140 for the interval or a count of the total number of items scanned across both the SCO terminals 130 and the POS terminals 140). Next, feature-label manager 114 determines, from the transaction logs 126, a total transaction or item scan processing time required for both the POS terminals 140 and the SCO terminals 130 during a given interval. The feature-label manager 114 maintains the total transaction processing or item scanning time for the POS terminals 140 during the interval as a first feature (hereinafter *"POS_Traffic_Duration"*). The feature-label manager 114 maintains the total transaction processing or item scanning time for the SCO terminals 130 during the interval as a second feature (hereinafter *"SCO_Traffic_Duration")*.

Feature-label manager 114 establishes an equation as follows:

$$Traffic = a * POS\_Traffic\_Duration + b * SCO\_Traffic\_Duration \text{ (equation 1)}.$$

Coefficients a and b are model-fitted coefficients determined during training by model trainer 115 of model 116. The coefficients a and b are considered to be an interval traffic or transaction rate on a POS terminal 140 for coefficient a, and an interval traffic rate on a SCO terminal 130 for coefficient b. That is, the traffic is a total number of transactions or items scanned in a given interval, the units of the first and second features are expressed in the interval of time used, and the coefficients are expressed as transactions or items scanned per interval of time. Notably, in a single interval of time (e.g., an hour) there can be many working hours of POS and SCO time because multiple SCO terminals 130 can operate at the same time and multiple cashiers working POS terminals 140 can each simultaneously work the hour or interval within the store.

In an embodiment, feature-label manager 114 establishes an equation that is based off the item level of detail to find the relationship between item scan time on the SCO terminal 130 and/or POS terminal 140 to the total time as the label. For example, the equation is as follows: Total item scan time = a * POS_Item _Scan _Duration + b * SCO_Item _Scan _Duration.

During training of model 116, feature-label manager 114 obtains past or historical transaction logs 126 and breaks them into the intervals to provide a training data set to model trainer 115. In an embodiment, the transaction logs span transactions associated with multiple stores of a given retailer. This ensures that a wide range of date associated with different stores of a retailer are used during training of the model 116. This is also of import because some stores may not have any SCO terminals 130 and other stores may have different amounts of SCO terminals 130. A large diverse set of training data ensures that model 116 fits coefficients a and b with greater accuracy during training. Outlier data is accounted for with a large diverse training data set.

The training data set includes transaction records that include for each interval and for each store labeled traffic (i.e., total transaction count), the *POS_Traffic_Duration* (e.g., first feature), and the *SCO_Traffic_Duration (e.g., second feature).* Model trainer 115 separates the training data set into training records and testing records for training of model 116.

For example, suppose a training data set record is associated with 1650 actual transactions for a given hour at a given store where 5 POS terminals 140 and 6 SCO terminals 130 were used to process the transactions for the hour. 2 attendants were required to oversee the 6 SCO terminals 130 (i.e., 1 attendant per 3 SCO terminals 130) and cashiers worked 5 POS terminals. The transaction log 126 indicates that the *POS_Traffic_Duration* was 4.5 hours (i.e., 270 net minutes to process POS transaction by 5 cashiers) and the actual *SCO_Traffic_Duration* was 5 hours (i.e., 300 net minutes to process on 6 SCO terminals 130). Feature-label manager 114 calculates the *POS_Traffic_Duration* and the *SCO_Traffic_Duration* from corresponding historical transaction logs 126 of the corresponding store using transaction start and end times for the interval for obtaining total processing durations of both the SCO terminals 130 and POS terminals 140. Feature-label manager 114 identifies the SCO transactions from the POS transactions based on the transaction terminal types and/or transaction terminal identifiers included in the historical transaction logs 126 for the corresponding store. For this training record and example, model 116 establishes the equation as follows: 200 X 4.5 + 150 X 5. Coefficient a can be interpreted as 200 transactions per cashier labor hour and coefficient b can be interpreted as 150 transactions per a single SCO terminal 130 processing hour. In a real case the coefficients are fitted using a large number of samples as described above.

Model trainer 115 passes each training record to model 116 during training. Model 116 calculates coefficients a and b for equation 1 by finding the relationships between the total transactions in a given interval, the SCO traffic duration, and the POS traffic duration and fitting the coefficients to ensure equation 1 is correct for the interval. In an embodiment, the model 116 is a linear regression model.

Model trainer 115 tests the predictive capabilities of model 116 using the testing records. Once acceptable accuracy metrics are obtained, model trainer 115 releases model 116 for use by SCO-POS staffing predictor 117.

Once model 116 is released to production, SCO-POS staffing predictor 117 provides optimal staffing interface 153 to user-operated devices 150. The optimal staffing interface 153 provides a variety of options and input fields to store managers or users interacting with the optimal staffing interface 153. SCO-POS staffing predictor 117 uses a variety of operational constraints provided by a user through the optimal staffing interface 153, forecasted traffic (i.e., total number of transactions for a given store in a given interval of future time) provided by a traffic forecaster 124, and predicted coefficients for equation 1 provided from the model 116 based on the actual traffic in order to predict an optimal mix or combination of staffing (e.g., attendants and cashiers) needed by the store for the future interval of time or past interval of time. The optimal combination or mix is one in which labor costs for the store are minimized by finding a minimal number of staff required to work the SCO terminals 130 and POS terminals 140 while still adequately supporting the transactions, transaction volume, or traffic at the store.

When finding or predicting the optimal combination of staffing, SCO-POS staffing predictor 117 accounts for idle time, which is not reflected on the SCO traffic durations and POS traffic durations used during training of model 116. The SCO-POS staffing predictor 117 makes this adjustment to reflect real-world conditions at stores of a given retailer. The time spent between an end of a previous transaction and a start of a next transaction is referred to as "idle time." A cashier's labor hours are dependent on the time spent on the traffic duration plus the idle time between transactions to account for such activities as bagging items, waiting for a next customer, replacing, on occasion, printer receipt rolls, doing price checks, etc.

This percentage of idle time for a given interval of time can be defined as an operational constraint provided by a retailer for stores associated with SCO terminals 130 and POS terminals 140. Other operational constraints provided include, by way of example only, a maximum number of permissible SCO terminals 130, a maximum number of permissible POS terminals 140, a minimum number of permissible POS terminals 140, an SCO-to-attendant ratio that identifies the SCO pool size per attendant, and an interval length in time (e.g., an hour of time, a fourhour shift, an eight hour shift, etc.). In an embodiment, the operational constraints are provided by a store manager through optimal staffing interface 153 to SCO-POS staffing predictor 117 via a user-operated device 150.

In an embodiment, some of the operational constraints, such as idle time, are associated with a profile for a given retailer or for a given store of a given retailer. In this way, a user does not have to continuously provide operational constraints that do no change or that remain constant through the optimal staffing interface 153 during each user session with SCO-POS staffing predictor 117; rather, SCO-POS staffing predictor 117 obtains the operational constraints from a profile set for the retailer's stores or a given store of the retailer.

In an embodiment, the SCO-POS staffing predictor 117 renders the profile-obtained operational constraints into input fields of the optimal staffing interface 153 as default operational constraints for viewing by the user during a user session. In an embodiment, the SCO-POS staffing predictor 117 uses a security setting associated with each of the default operational constraints to determine whether the user is permitted to override or not override a corresponding default operational constraint during a user session.

In an embodiment, the idle time is 30% of the total time included in a given interval. For example, if the interval is 1 hour or 60 minutes, the idle time for the hour is 18 minutes, which means that transaction time for the interval at a given POS terminal 140 is 42 minutes. Thus, 1 cashier's labor hour includes 42 minutes in which they processed transactions and 18 minutes of idle time between transactions, meaning that the cashier was at the POS terminal 140 but traffic is not being logged at the register.

During a given user session, SCO-POS staffing predictor 117 identifies an operational constraint for a user session associated with an interval of time for a given store of a given retailer. The interval of time is either a further interval of time or a past interval of time. When a future interval of time is identified, SCO-POS staffing predictor 117 obtains a traffic prediction from an appropriate traffic forecaster 124 or traffic forecast model associated with the retailer or the store. When a past interval of time is identified, SCO-POS staffing predictor 117 obtains the actual traffic from feature-label manager 114 associated with the retailer or the store to provide the user with insights over a hypothetical past arrangement.

SCO-POS staffing predictor 117 also identifies from a profile or from inputted data, which is provided by a user through optimal staffing interface 153, the operational constraints associated with the maximum number of permissible SCO terminals 130, the maximum number of permissible POS terminals 140, the minimum number of permissible POS terminals 140, and the SCO-to-attendant ratio for the store. Next, SCO-POS staffing predictor 117 provides the traffic, either received from the traffic forecast or the actual traffic calculated on actual transaction data from transaction logs 126, to model 116 as input and receives as output the coefficients a and b for the POS traffic duration and the SCO traffic duration, respectively.

SCO-POS staffing predictor 117 then finds the POS traffic duration and the SCO traffic duration which satisfies equation 1 with the model-provided coefficients by utilizing the operational constraints associated with the maximum number of permissible SCO terminals 130, the minimum number of permissible POS terminals 140, the SCO-to-attendant ratio for the store, and idle time. First, SCO-POS staffing predictor 117 finds the SCO traffic duration by utilizing the maximum number of permissible SCO terminals 130 constrained by any greater than zero minimum number of permissible POS terminals 140. Notably, the number of POS terminals 140 can be equal to zero when a store permits non-active POS terminals 140 with only active SCO terminals 130.

The SCO-POS staffing predictor 117 then reduces the determined SCO traffic duration by the operational constraint associated with idle time because the SCO traffic duration and the POS traffic duration associated with the fitted coefficients provided by the model 116 did not account for bagging time, and other time lags between transactions. Next, SCO-POS staffing predictor 117 solves equation 1 for the POS traffic duration utilizing the forecasted traffic or actual traffic, the model-provided coefficients, and the idle time reduced SCO traffic duration.

The SCO-POS staffing predictor 117 then adds the idle time back to the POS traffic duration to establish an adjusted or modified POS traffic duration, which accounts for time between transactions in the interval. The SCO-POS staffing predictor 117 then uses the idle-time reduced SCO traffic duration and the upward adjusted idle-time POS traffic duration to determine the optimal staffing combination for the interval by dividing the SCO traffic duration by the operational constraint associated with the SCO-to-attendant ratio and further dividing the result by the interval of time, and by dividing the POS traffic duration by the interval of time. Any result of the divisions for the optimal staffing combination that is a non-integer is rounded up to a next whole integer. For example, if the cashiers are determined to be 1.2, the SCO-POS staffing predictor 117 rounds the 1.2 up to 2 cashiers since a fraction of a cashier is not possible, assuming staff shifts of a full interval. The SCO-POS staffing predictor 117 renders the optimal staffing combination or mix for the interval back to the user through the optimal staffing interface. Other options would be to assign the additional cashier to multiple tasks when rounding up or to round the number down and consider this time point to understand.

As an example, suppose during a user session with SCO-POS staffing predictor 117 an interval of time is a particular hour of business for a store associated with an upcoming Monday. SCO-POS staffing predictor 117 obtains a traffic forecast equal to 1000 from an appropriate traffic forecaster 124 or traffic model for the interval and obtains operational constraints as follows for the user session: the maximum number of permissible SCO terminals 130 is equal to 6, the minimum number of POS terminals 140 is equal to 0, the SCO-to-attendant ratio is equal to 3, and the idle time is equal to 30%. SCO-POS staffing predictor 117 provides the traffic forecast of 1000 to model 116 and receives back the corresponding coefficients for SCO traffic duration and the POS traffic duration as output from the model 116. SCO-POS staffing predictor 117 finds the SCO traffic duration that maximizes the allowable SCO terminals 130 of 6 since the minimum number of POS terminals is equal to 0 for equation 1 and reduces the determined SCO traffic duration by 30% (i.e., 4.2 or 70% if 6). The reason to start with SCO terminals 130 is that SCO terminals 130 need less attendants, so it is more labor efficient. SCO-POS staffing predictor 117 then solves equation 1 for POS traffic duration to determine how many POS terminals 140 are needed given 1000 transactions forecasted as the traffic for the future interval of an hour with just 4.2 SCO terminals 130 available. SCO-POS staffing predictor 117 adjusts the POS traffic duration found upward by 30% (i.e., POS traffic duration multiplied by 1.3) to account for the idle time. The adjusted POS traffic duration is divided by an hour or 60 minutes to determined that 1 POS terminal 140 is needed. 4.2 SCO terminals 130 are adjusted to 5 SCO terminals associated with just 2 attendants since the SCO-to-attendant ratio was 3-1 (i.e., 2 attendants can oversee 6 SCO terminals 130). Notably, since the SCO-to-attendant ratio is 3-1, SCO-POS staffing predictor 117 can also determine that 6 SCO terminals 130 rather than 5 for the optimal staffing combination. SCO-POS staffing predictor 117 returns an optimal staffing combination or mix of 2 attendants and 1 POS cashier for the future interval of time.

SCO-POS staffing predictor 117 also provides "what if" conditional optimal staffing combinations to a user during a user session via optimal staffing interface 153. For example, suppose a user wants to know if an optimal staffing combination was working for an already past or previous week's Tuesday between 2-3 PM where the store utilized 5 cashiers for 5 POS terminals 140 and 2 attendants for 6 SCO terminals 130. In this situation, the actual traffic, the actual SCO traffic duration, and the actual POS traffic duration can be determined from the corresponding transaction logs 126 and idle time associated with the store. SCO-POS staffing predictor 117 performs the operations discussed above using the actual traffic values and returns to the user through the interface that the optimal staffing combination should have been 3 cashiers working 3 POS terminals 140 and 2 attendants monitoring 6 SCO terminals 130. The imposed idle time keeps the SCO allocation from being swamped, thus allowing to maintain short waiting lines and customer experience.

SCO-POS staffing predictor 117 also generates reports for a time series of a given interval of time. For example, suppose a store manager wants to know hour-by-hour how many attendants and cashiers are needed for a work schedule associated with an upcoming week at the store. During a user session, the user requests the report through the optimal staffing interface 153 by identifying the hour interval of time and the upcoming week (i.e., the time series). SCO-POS staffing predictor 117 obtains the hour-by-hour traffic forecast from a traffic forecaster 124 or traffic model and iterates the above discussed operations for each hour in the time series for the upcoming week to provide optimal staffing combinations for each hour back to the user via a report. Similarly, SCO-POS staffing predictor 117 provides reports for optimal staffing combinations that should have been scheduled by a store manger versus the actual staffing combinations. Store managers or supervisors of the store managers can use the reports to evaluate store labor planning performance.

In an embodiment, the interval of time is a configurable operational constraint provided by a user during a user session between optimal staffing interface 153 and SCO-POS staffing predictor 117. In an embodiment, the interval of time is an hour, a half hour, eight hours, four hours, 12 hours, a half an hour, 15 minutes, etc. A time series requested during a user session includes a work day, a work week, a weeks of a month, months of a quarter, a half work day, etc. In an embodiment, as was discussed above, the traffic and equation 1 is expressed as items scanned and item scan duration at the SCO terminals 130 and POS terminals 140 during a given interval of time. In an embodiment, whether equation 1 is set and solved based on traffic or items is also an operational constraint set for a retailer, a store of the retailer, or by a user during a user session.

Experimentation has revealed that there is a strong linear correlation between traffic of a store, SCO traffic duration, and POS traffic duration. In an embodiment, this linear correlation is a Pearson's correlation coefficient of 0.92. Given results of the experimentation, the model 116 was derived as a supervised linear regression model. Notably, other types of models, supervised or unsupervised, can be used without departing from the teachings presented herein, such as logistic regression, decision trees, random forest, support vector machines, and/or neural networks for supervised models, and such as clustering, principal component analysis, and/or autoencoders for unsupervised models.

System 100 leverages existing SCO terminals 130 of a store to reduce labor hours on both the SCO terminals 130 and the POS terminals 140 of the store. The optimal staffing combination assists store managers in scheduling labor hours; the model 116 is fast such that the relationships or coefficients are provided in real-time with no processing lag detectable. Also, training of the model is not complex and can be done rapidly with the training record comprising just one labeled traffic and two features.

Further, system 100 reduces store labor costs by providing the optimal staffing combinations based on the conditions and needs of a given store. Even a modest 5% labor cost improvement would result in hundreds of thousands of dollars recovered annually by a retailer associated with the store and its other stores. The optimal staffing combinations are provided in minutes through the optimal staffing interface 153 whereas current approaches take days to receive a predicted staffing combination.

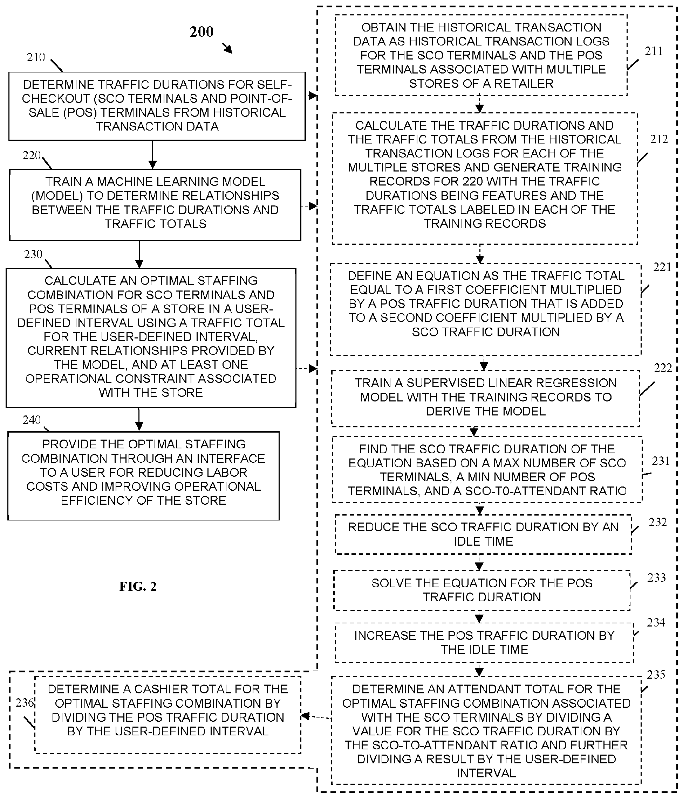

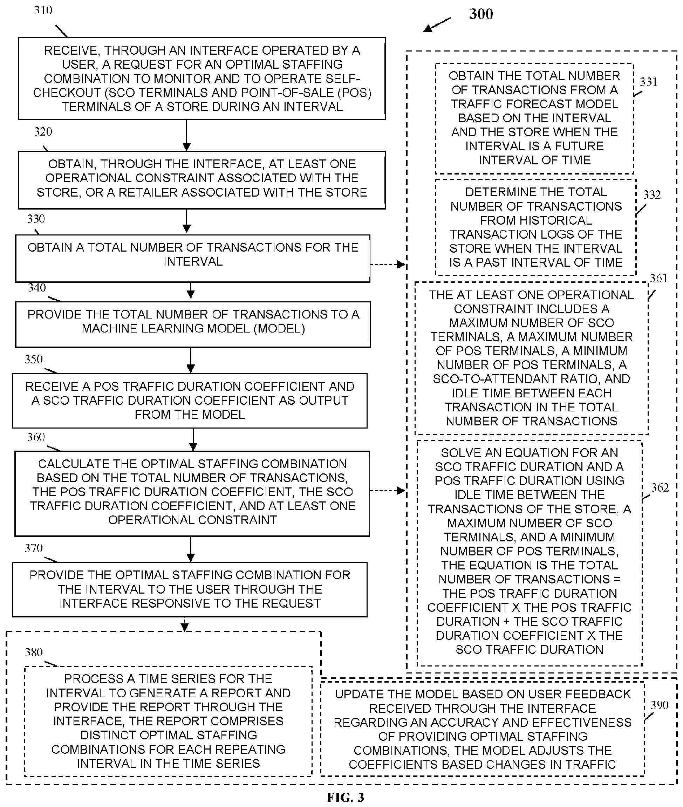

The above-referenced embodiments and other embodiments are now discussed with reference to FIGS. 2 and 3.

FIG. 2 is a flow diagram of a method 200 for optimizing resource scheduling for transaction terminals, according to an example embodiment. The software module(s) that implements the method 200 is referred to as an "optimal SCO and POS terminal staffing predictor." The optimal SCO and POS terminal staffing predictor is implemented as executable instructions programmed and residing within memory and/or a non-transitory computer-readable (processor-readable) storage medium and executed by one or more processors of one or more devices. The processor(s) of the device(s) that executes the optimal SCO and POS staffing predictor are specifically configured and programmed to process the optimal SCO and POS terminal staffing predictor. The optimal SCO and POS terminal staffing predictor may have access to one or more network connections during its processing. The network connections can be wired, wireless, or a combination of wired and wireless.

In an embodiment, the device that executes the optimal SCO and POS terminal staffing predictor is cloud 110. In an embodiment, the device that executes the optimal SCO and POS terminal staffing predictor s a retail server 120. In an embodiment, the optimal SCO and POS terminal staffing predictor is any combination of or all of data collector 113, feature-label manager 114, model trainer 115, model 116, and/or SCO-POS staffing predictor 117.

At 210, optimal SCO and POS terminal staffing predictor determines transaction or traffic durations for SCO terminals 130 and POS terminals 140 form historical transaction data. In an embodiment, at 211, the optimal SCO and POS terminal staffing predictor obtains the historical transaction data as historical transaction logs 126 for the SCO terminals 130 and POS terminals 140 associated with multiple stores of a retailer.

In an embodiment, of 211, and at 212, the optimal SCO and POS terminal staffing predictor calculates the traffic durations and the traffic totals from the historical transaction logs for each of the multiple stores. The optimal SCO and POS terminal staffing predictor generates training records for 220 with the traffic durations being features of the training records and the traffic totals being labeled within each of the transaction records.

At 220, the optimal SCO and POS terminal staffing predictor trains model 116 to determine relationships between the traffic durations and the traffic totals. In an embodiment of 121 and 220, at 221, the optimal SCO and POS terminal staffing predictor defines an equation (i.e., equation 1 discussed above). The equation is the traffic total equal to a first coefficient multiplied by a POS traffic duration added to a second coefficient multiplied by a SCO traffic duration. The relationships provided by the model include the first coefficient and the second coefficient. In an embodiment of 221, and at 222, the optimal SCO and POS terminal staffing predictor trains a supervised linear regression model with the training records to derive the model 116.

At 230, the optimal SCO and POS terminal staffing predictor calculates an optimal staffing combination for SCO terminals 130 and POS terminals 140 or a store in a user-defined interval using a traffic total for the user-defined interval, current relationships provided by the model 116, and at least one operational constraint. The operational constraint(s) can be any of the operational constraints discussed above with system 100.

In an embodiment of 222 and 230, at 231, the optimal SCO and POS terminal staffing predictor finds the SCO traffic duration of the equation based on a maximum number of SCO terminals 130, a minimum number of POS terminals 140, and a number of SCO-to-attendant ratio. The operational constraints include the maximum number of SCO terminals 130, the minimum number of POS terminals 140, and the SCO-to attendant ratio.

In an embodiment of 231 and at 232, the optimal SCO and POS terminal staffing predictor reduces the SCO traffic duration by an idle time. The operational constraints additionally include the idle time.

In an embodiment of 232 and at 233, the optimal SCO and POS terminal staffing predictor solves the equation for the POS traffic duration. In an embodiment of 233 and at 234, the optimal SCO and POS terminal staffing predictor increases the POS traffic duration by the idle time.

In an embodiment of 234 and at 235, the optimal SCO and POS terminal staffing predictor determines an attendant total for the optimal staffing combination by dividing a value for the SCO traffic duration by the SCO-to-attendant ration and further dividing a result by the user-defined interval. In an embodiment of 235 and at 236, the optimal SCO and POS terminal staffing predictor determines a cashier total for the optimal staffing combination by dividing the POS traffic duration by the user-defined interval.

At 240, the optimal SCO and POS terminal staffing predictor provides the optimal staffing combination through an optimal staffing interface 153 to user-operated device 150 being operated by a user. In an embodiment, the user is a store manager of the store being provided the optimal staffing combination. The optimal staffing combination is provided for reducing labor cost and improving operational efficiency of the store.

FIG. 3 is a diagram of another method 300 for optimizing resource scheduling for transaction terminals, according to an example embodiment. The software module(s) that implements the method 300 is referred to as a "SCO and POS staffing predictor." The SCO and POS staffing predictor is implemented as executable instructions programmed and residing within memory and/or a non-transitory computer-readable (processor-readable) storage medium and executed by one or more processors of one or more device(s). The processors that execute the SCO and POS staffing predictor are specifically configured and programmed for processing the SCO and POS staffing predictor. The SCO and POS staffing predictor may have access to one or more network connections during its processing. The network connections can be wired, wireless, or a combination of wired and wireless.

In an embodiment, the device that executes SCO and POS staffing predictor is cloud 110. In an embodiment, the device that executes the SCO and POS staffing predictor is retail server 120. In an embodiment, the SCO and POS staffing predictor is any combination of or all of data collector 113, feature-label manager 114, model trainer 115, model 116, SCO-POS staffing predictor 117, and/or method 200. The SCO and POS staffing predictor presents another and, in some ways, enhanced processing perspective from that which was discussed above for the system 100 of FIG. 1 and/or method 200 of FIG. 2.

At 310, the SCO and POS staffing predictor receives, through optimal staffing interface 153 operated by a user, a request for an optimal staffing combination to monitor and to operate SCO terminals 130 and POS terminals 140 of a store during an interval of time.

At 320, the SCO and POS staffing predictor obtains, through the optimal staffing interface 153, at least one operational constraint associated with the store, or a retailer of associated with the store. In an embodiment, the SCO and POS staffing predictor obtains some of a plurality of operational constraints through the optimal staffing interface from the user while obtaining other operational constraints from a profile assigned to the store and/or assigned to the retailer.

At 330, the SCO and POS staffing predictor obtains a total number of transaction for the interval. In an embodiment, at 321, the SCO and POS staffing predictor obtains the total number of transaction from a traffic forecast model or a traffic forecaster 124 based on the interval and the store when the interval is a future interval of time. In an embodiment, at 322, the SCO and POS staffing predictor determines the total number of transactions from historical transaction logs 126 of the store when the interval is a past interval of time.

At 340, the SCO and POS staffing predictor provides the total number of transaction to a model 116. At 350, the SCO and POS staffing predictor receives a POS traffic duration coefficient and a SCO traffic duration coefficient as output from the model 116.

At 360, the SCO and POS staffing predictor calculates the optimal staffing combination based on the total number of transactions, the POS traffic duration coefficient, the SCO traffic duration coefficient, and the operational constraint(s). In an embodiment, at 361, the operational constraints include a maximum number of SCO terminals 130, a maximum number of POS terminals 140, a minimum number of POS terminals 140, a SCO-to-attendant ratio, and idle time between each transaction in the total number of transactions.

In an embodiment, at 362, the SCO and POS staffing predictor solves an equation (e.g., equation 1 discussed above with system 100) for an SCO traffic duration and a POS traffic duration using idle time between the transactions of the store, a maximum number of SCO terminals 130, a minimum number of POS terminals 140. The equation is the total number of transactions equal to the POS traffic duration coefficient times the POS traffic duration plus the SCO traffic duration coefficient times the SCO traffic duration.

At 370, the SCO and POS staffing predictor provides the optimal staffing combination for the interval to the user through the optimal staffing interface 153. This is in response or responsive to the request received from the user at 310.

In an embodiment, at 380, the SCO and POS staffing predictor processes a time series for the interval to generate a report. The SCO and POS staffing predictor provides the report through the optimal staffing interface 153 to the user. The report includes distinct optimal staffing combinations for each repeating interval in the time series.

In an embodiment, at 390, the SCO and POS staffing predictor update the model 116 based on user feedback received through the optimal staffing interface 153 regarding an accuracy and effectiveness of providing optimal staffing combinations. The model adjusts the coefficients based on changes detected in traffic patterns of the store within the transaction logs 126 of the store. The permits dynamic adjustments to the model 116 over time to account for changes occurring in traffic totals and traffic durations at a given store or set of stores.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed. The reader's attention is directed to all papers and documents which are filed concurrently with or previous to this specification in connection with this application and which are open to public inspection with this specification, and the contents of all such papers and documents are incorporated herein by reference.

**Claims**

1. A method, comprising:

   determining traffic durations for self-checkout (SCO) terminals and point-of-sale (POS) terminals from historical transaction data;
   training a machine learning model (model) to determine relationships between the traffic durations and traffic totals;
   calculating an optimal staffing combination for SCO terminals and POS terminals of a store in a user-defined interval using a traffic total for the user-defined interval, current relationships provided by the model based on the traffic total, and at least one operational constraint associated with the store; and
   providing the optimal staffing combination through an interface to a user for reducing labor costs and improving operational efficiency of the store.

2. The method of claim 1, wherein determining further includes obtaining the historical transaction data as historical transaction logs for the SCO terminals and POS terminals associated with multiple stores of a retailer; and optionally wherein determining further includes calculating the traffic durations and the traffic totals from the historical transaction logs for each of the multiple stores and generating training records for training of the model with the traffic durations being features and the traffic totals labeled in each of the training records.

3. The method of claim 1 or claim 2, wherein training further includes defining an equation as the traffic total equal to a first coefficient multiplied by a POS traffic duration that is added to a second coefficient multiplied by a SCO traffic duration, wherein the current relationships comprise the first coefficient and the second coefficient.

4. The method of claim 3 when dependent on claim 2, wherein training further includes training a supervised linear regression model with the training records to derive the model.

5. The method of claim 3 or claim 4, wherein calculating further includes finding the SCO traffic duration of the equation based on a maximum number of SCO terminals, a minimum number of POS terminals, and an SCO-to-attendant ratio, wherein the at least one operational constraint comprises the maximum number of SCO terminals, the minimum number of POS terminals, and the SCO-to-attendant ratio; and optionally wherein finding further includes reducing the SCO traffic duration by an idle time, wherein the at least one operational constraint further comprises the idle time.

6. The method of claim 5, wherein reducing further includes solving the equation for the POS traffic duration; and optionally wherein solving further includes increasing the POS traffic duration by the idle time.

7. The method of claim 6, wherein increasing further includes determining an attendant total for the optimal staffing combination associated with the SCO terminals by dividing a value for the SCO traffic duration by the SCO-to-attendant ratio and further dividing a result by the user-defined interval; and optionally

wherein determining further includes determining a cashier total for the optimal staffing combination by dividing the POS traffic duration by the user-defined interval.

8. A method, comprising:

receiving, through an interface operated by a user, a request for an optimal staffing combination to monitor and to operate self-checkout (SCO) terminals and point-of-sale (POS) terminals of a store during an interval;
obtaining, through the interface, at least one operational constraint associated with the store, or a retailer associated with the store;
obtaining a total number of transactions for the interval;
providing the total number of transactions to a machine learning model (model);
receiving a POS traffic duration coefficient and a SCO traffic duration coefficient as output from the model;
calculating the optimal staffing combination based on the total number of transactions, the POS traffic duration coefficient, the SCO traffic duration coefficient, and at least one operational constraint; and
providing the optimal staffing combination for the interval to the user through the interface responsive to the request.

9. The method of claim 8, wherein the at least one operational constraint comprises a maximum number of SCO terminals, a maximum number of POS terminals, a minimum number of POS terminals, a SCO-to-attendant ratio, and idle time between each transaction in the total number of transactions.

10. The method of claim 8 or claim 9, wherein obtaining the total number of transactions further includes obtaining the total number of transactions from a traffic forecast model based on the interval and the store when the interval is a future interval of time; or
wherein obtaining the total number of transactions further includes determining the total number of transactions from historical transaction logs of the store when the interval is a past interval of time.

11. The method of any of claims 8 to 10, wherein calculation further includes solving an equation for an SCO traffic duration and a POS traffic duration using idle time between transactions for the store, a maximum number of SCO terminals, and a minimum number of POS terminals, wherein the equation is the total number of transactions equal to the POS traffic duration coefficient multiplied by the POS traffic duration plus, the SCO traffic duration coefficient multiplied by the SCO traffic duration.

12. The method of any of claims 8 to 11 further comprising, processing a time series for the interval in a report, and providing a report to the user through the interface, wherein the report comprises distinct optimal staffing combinations for each repeating interval in the time series.

13. The method of any of claims 8 to 12, further comprising updating the model based on user feedback received through the interface regarding an accuracy and effectiveness of provided optimal staffing combinations, wherein the model adjusts the POS traffic duration coefficient and the SCO traffic duration coefficient based on changes in a POS traffic duration and an SCO traffic duration observed in traffic patterns at the store.

14. A system, comprising:

at least one processor and a non-transitory computer-readable storage medium;
the non-transitory computer-readable storage medium comprises executable instructions; and
the executable instructions when executed by the at least one processor cause the at least one processor to perform operations comprising:

receiving, through an interface operated by a user, a request for an optimal staffing combination to monitor and operate self-checkout (SCO) terminals and point-of-sale (POS) terminals of a store during a specified interval;
obtaining, through the interface, at least one operational constraint associated with the store, or a retailer associated with the store, wherein the at least one operational constraint includes a maximum number of SCO terminals, a maximum number of POS terminals, a minimum number of POS terminals, a SCO-to-attendant ratio, and idle time between each transaction;
obtaining a total number of transactions for the specified interval, wherein the total number of transactions is obtained from a traffic forecast model when the specified interval is a future interval of time, and from historical transaction logs of the store when the specified interval is a past interval of time;
providing the total number of transactions to a machine learning model (model);
receiving from the model a POS traffic duration coefficient and a SCO traffic duration coefficient as output;
calculating the optimal staffing combination based on the total number of transactions, the POS traffic duration coefficient, the SCO traffic duration coefficient, and the at least one operational constraint by solving an equation for an SCO traffic duration and a POS traffic duration using the idle time between transactions, the maximum number of SCO terminals, and the minimum number of POS terminals;
processing a time series for the specified interval in a report, and providing a report to the user through the interface, wherein the report comprises distinct optimal staffing combinations for each repeating interval in the time series; and
providing the report for the time series to the user through the interface responsive to the request.

15. The system of claim 14, wherein the model is trained as a supervised linear regression model to derive relationships between the total number of transactions, the POS traffic duration, and the SCO traffic duration in order to predict the POS traffic duration coefficient and the SCO traffic duration coefficient.

**100**

RETAIL SERVER(S)
120

PROCESSOR(S) 121

MEDIUM 122

TRANSACTION SYSTEM
123

TRAFFIC FORECASTER 124

TRANSACTION
FORECASTER
125

TRANSACTION LOG(S) 126

SELF-CHECKOUT (SCO) TERMINAL(S) 130

PROCESSOR(S) 131

MEDIUM 132

TRANSACTION MANAGER 133

POINT-OF-SALE (POS) TERMINAL(S) 140

PROCESSOR(S) 141

MEDIUM 142

TRANSACTION MANAGER 143

CLOUD/SERVER(S) 110

PROCESSOR(S) 111

NON-TRANSITORY COMPUTER-
READABLE STORAGE MEDIUM
(MEDIUM)
112

DATA COLLECTOR 113

FEATURE-LABEL MANAGER 114

MACHINE-LEARNING MODEL
(MODEL) TRAINER 115

MODEL (MODEL) 116

SCO-POS STAFFING PREDICTOR
117

USER-OPERATED DEVICE 150

PROCESSOR(S) 151

MEDIUM 152

OPTIMAL STAFFING INTERFACE
153

**FIG. 1**

**200**

210

DETERMINE TRAFFIC DURATIONS FOR SELF-CHECKOUT (SCO TERMINALS AND POINT-OF-SALE (POS) TERMINALS FROM HISTORICAL TRANSACTION DATA

220

TRAIN A MACHINE LEARNING MODEL (MODEL) TO DETERMINE RELATIONSHIPS BETWEEN THE TRAFFIC DURATIONS AND TRAFFIC TOTALS

230

CALCULATE AN OPTIMAL STAFFING COMBINATION FOR SCO TERMINALS AND POS TERMINALS OF A STORE IN A USER-DEFINED INTERVAL USING A TRAFFIC TOTAL FOR THE USER-DEFINED INTERVAL, CURRENT RELATIONSHIPS PROVIDED BY THE MODEL, AND AT LEAST ONE OPERATIONAL CONSTRAINT ASSOCIATED WITH THE STORE

240

PROVIDE THE OPTIMAL STAFFING COMBINATION THROUGH AN INTERFACE TO A USER FOR REDUCING LABOR COSTS AND IMPROVING OPERATIONAL EFFICIENCY OF THE STORE

**FIG. 2**

OBTAIN THE HISTORICAL TRANSACTION DATA AS HISTORICAL TRANSACTION LOGS FOR THE SCO TERMINALS AND THE POS TERMINALS ASSOCIATED WITH MULTIPLE STORES OF A RETAILER
211

CALCULATE THE TRAFFIC DURATIONS AND THE TRAFFIC TOTALS FROM THE HISTORICAL TRANSACTION LOGS FOR EACH OF THE MULTIPLE STORES AND GENERATE TRAINING RECORDS FOR 220 WITH THE TRAFFIC DURATIONS BEING FEATURES AND THE TRAFFIC TOTALS LABELED IN EACH OF THE TRAINING RECORDS
212

DEFINE AN EQUATION AS THE TRAFFIC TOTAL EQUAL TO A FIRST COEFFICIENT MULTIPLIED BY A POS TRAFFIC DURATION THAT IS ADDED TO A SECOND COEFFICIENT MULTIPLIED BY A SCO TRAFFIC DURATION
221

TRAIN A SUPERVISED LINEAR REGRESSION MODEL WITH THE TRAINING RECORDS TO DERIVE THE MODEL
222

FIND THE SCO TRAFFIC DURATION OF THE EQUATION BASED ON A MAX NUMBER OF SCO TERMINALS, A MIN NUMBER OF POS TERMINALS, AND A SCO-T0-ATTENDANT RATIO
231

REDUCE THE SCO TRAFFIC DURATION BY AN IDLE TIME
232

SOLVE THE EQUATION FOR THE POS TRAFFIC DURATION
233

INCREASE THE POS TRAFFIC DURATION BY THE IDLE TIME
234

DETERMINE A CASHIER TOTAL FOR THE OPTIMAL STAFFING COMBINATION BY DIVIDING THE POS TRAFFIC DURATION BY THE USER-DEFINED INTERVAL
236

DETERMINE AN ATTENDANT TOTAL FOR THE OPTIMAL STAFFING COMBINATION ASSOCIATED WITH THE SCO TERMINALS BY DIVIDING A VALUE FOR THE SCO TRAFFIC DURATION BY THE SCO-TO-ATTENDANT RATIO AND FURTHER DIVIDING A RESULT BY THE USER-DEFINED INTERVAL
235

FIG. 3

Europäisches
Patentamt

European
Patent Office

Office européen
des brevets

# EUROPEAN SEARCH REPORT

**Application Number**

EP 25 17 8645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/169426 A1 (MORGAN KIP OLIVER [US] ET AL) 1 June 2023 (2023-06-01) * paragraphs [0007], [0013], [0026] – [0034], [0063] – [0064]; claims 13,14,17; figures 1-3 * ----- | 1-15 | INV. G06Q10/06 G06Q10/063 G06Q10/0631 G06Q30/0201 G06Q30/0238 |

**TECHNICAL FIELDS SEARCHED (IPC)**

G06Q

The present search report has been drawn up for all claims

| Place of search | Date of completion of the search | Examiner |
|---|---|---|
| Munich | 9 October 2025 | Bîrlescu, V |

EPO FORM 1503 03.82 (P04C01)

## ANNEX TO THE EUROPEAN SEARCH REPORT
## ON EUROPEAN PATENT APPLICATION NO.

EP 25 17 8645

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | Publication date | Patent family member(s) | Publication date |
|---|---|---|---|
| US 2023169426 A1 | 01-06-2023 | NONE | |

For more details about this annex : see Official Journal of the European Patent Office, No. 12/82

EPO FORM P0459